(19) Europäisches Patentamt European Patent Office Office européen des brevets

(11) **EP 4 582 796 A1**

(12) **EUROPEAN PATENT APPLICATION**
published in accordance with Art. 153(4) EPC

(43) Date of publication:
**09.07.2025 Bulletin 2025/28**

(21) Application number: **23859065.7**

(22) Date of filing: **03.08.2023**

(51) International Patent Classification (IPC):
*G01N 23/04* (2018.01)    *G01N 23/05* (2006.01)
*G01N 23/083* (2018.01)   *G01N 23/09* (2018.01)
*B07C 5/34* (2006.01)

(86) International application number:
**PCT/CN2023/111104**

(87) International publication number:
**WO 2024/046030 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.09.2022 CN 202211064776**

(71) Applicants:
• **Nuctech Company Limited**
  **Beijing 100084 (CN)**
• **Tsinghua University**
  **Haidian District,**
  **Beijing 100084 (CN)**

(72) Inventors:
• **LI, Yuanjing**
  **Beijing 100084 (CN)**
• **SUN, Shangmin**
  **Beijing 100084 (CN)**

• **YANG, Yigang**
  **Beijing 100084 (CN)**
• **MING, Shenjin**
  **Beijing 100084 (CN)**
• **LIU, Bicheng**
  **Beijing 100084 (CN)**
• **WANG, Dongyu**
  **Beijing 100084 (CN)**
• **DANG, Yongle**
  **Beijing 100084 (CN)**
• **ZONG, Chunguang**
  **Beijing 100084 (CN)**
• **CUI, Tongyuan**
  **Beijing 100084 (CN)**
• **YU, Yangyi**
  **Beijing 100084 (CN)**

(74) Representative: **Cabinet Beau de Loménie**
  **103, rue de Grenelle**
  **75340 Paris Cedex 07 (FR)**

(54) **MINERAL SEPARATION APPARATUS AND MINERAL SEPARATION METHOD**

(57) A mineral separation apparatus and a mineral separation method are provided. The mineral separation apparatus includes: a conveying mechanism (1), a first light source component (2) located above the conveying mechanism (1), a first detector component (3) located below the conveying mechanism (1), and a separation mechanism (4). The mineral separation method includes: performing (S10) a dual-mode imaging by irradiating the mineral with the neutron ray and the X-ray; determining (S20), according to a result of the dual-mode imaging, the mineral as one of different grades of mineral; and separating (S30) the one grade of mineral from other grades of mineral. According to the mineral separation apparatus and the mineral separation method, the separation of the mineral, especially a lithium ore or a boron ore, may be completed, which may reduce an environmental pollution, a water consumption, a mineral separation cost and an energy consumption, and ensure a stable and reliable quality of a mineral separation product.

FIG. 4

## Description

CROSS REFERENCE TO RELATED APPLICATION(S)

This application claims priority to Chinese Patent Application No. 202211064776.0, filed on September 1, 2022, and entitled "MINERAL SEPARATION APPARATUS AND MINERAL SEPARATION METHOD", the entire content of which is incorporated herein in its entirety by reference.

TECHNICAL FIELD

The present disclosure relates to a field of mineral separation technology, in particular to a mineral separation apparatus and a mineral separation method.

BACKGROUND

Lithium and boron, as valuable mineral resources, are widely used in high-tech, military industry and livelihood products.

Mineral separation is to separate useful minerals by a flotation separation method, a gravity separation method, a magnetic separation method, an electrostatic separation method, etc. according to physical and chemical properties of different minerals in a mineral after crushing and grinding the mineral.

With a development of the industry and an improvement of environmental protection requirements, the above-mentioned traditional mineral separation technology has a series of problems:

1. High infrastructure investment. A series of factories and facilities need to be constructed. For example, the construction of facilities such as grinding, flotation separation, concentration and dehydration of fine tailings, boilers, tailings ponds, etc. should be considered for the flotation separation method; and the construction of facilities such as magnetic separation, dense medium cyclone, dense medium configuration, dehydration of fine tailings, etc. should be considered for the gravity separation method.

2. Heavy environmental pollution. In particular, the flotation separation method requires an addition of a variety of chemical agents, which may easily cause water and soil pollution.

3. High water consumption. The dense medium cyclone and the flotation separation are both wet mineral separation technologies, which usually require 3 $m^3$ to 11 $m^3$ of fresh water to process one ton of raw ore. Water from dense medium mineral separation may be recycled after precipitation, while only a part of the produced water in the flotation separation may be reused after a long-term purification due to an addition of a large number of chemical agents.

4. High operating cost. A cost of processing one ton of raw ore by the flotation separation method is about RMB 120 yuan, and a cost of processing one ton of raw ore by the gravity separation method is about RMB 30 to 40 yuan.

5. High energy consumption. In the flotation separation method, a separated particle size needs to be controlled by grinding, and the grinding is very energy-consuming; in the gravity separation method, a flow and pressure of a medium need to be controlled through a dense medium delivery pump, and the pump requires a high power and a high energy consumption; by addition of other devices, the construction of a small mineral separation plant with a daily processing capacity of 1000 tons substantially require an electric power consumption of above 1000 kW.

6. Unstable product quality. Due to main influences of mineral properties and technological levels of operators, a mineral grade may often change. Without timely adjustment, it is easy to lead to a low grade of concentrate ore and increased impurities, affecting sales and downstream processing.

SUMMARY

In view of the above-mentioned defects or deficiencies in the prior art, it is desirable to provide a mineral separation apparatus and a mineral separation method.

According to a first aspect of the present disclosure, a mineral separation apparatus is provided, including:

a conveying mechanism, a first light source component located above the conveying mechanism, a first detector component located below the conveying mechanism, and a separation mechanism,

where the first light source component is configured to emit a neutron ray irradiated on a mineral and an X-ray irradiated on the mineral;

where the first detector component is configured to detect and acquire detection data of the X-ray attenuated by the mineral, detection data of the X-ray not attenuated by the mineral, detection data of the neutron ray attenuated by the mineral, and detection data of the neutron ray not attenuated by the mineral; and

where the separation mechanism is configured to separate the mineral.

Further, the first light source component includes a first light source and a second light source independent from each other, the first light source is configured to emit the neutron ray irradiated on the mineral, the second light source is configured to emit the X-ray irradiated on the mineral, and the first light source and the second light source are sequentially provided in a conveying direction of the conveying mechanism.

Further, the first detector component includes a neutron detector and an X-ray detector independent from each other.

Further, the mineral separation apparatus further includes: a second light source component provided on a side in a conveying direction of the conveying mechanism; and a second detector component provided on another side in the conveying direction of the conveying mechanism.

Further, the separation mechanism is a blowing apparatus, and the blowing apparatus is configured to separate the mineral leaving the conveying mechanism.

Further, the blowing apparatus includes a high-pressure nozzle, and the high-pressure nozzle includes blowing holes arranged in an array.

According to a second aspect of the present disclosure, a mineral separation method is provided, applied to a mineral separation system including the above-mentioned mineral separation apparatus and a controller, including:

step S10: performing a dual-mode imaging by irradiating the mineral with the neutron ray and the X-ray;
step S20: determining, according to a result of the dual-mode imaging, the mineral as one of different grades of mineral; and
step S30: separating the one grade of mineral from other grades of mineral.

Further, the step S10 includes:

step S11: detecting, by a detector component, the detection data of the X-ray attenuated by the mineral, the detection data of the X-ray not attenuated by the mineral, the detection data of the neutron ray attenuated by the mineral, and the detection data of the neutron ray not attenuated by the mineral, so as to obtain X-ray mineral-free detection data, X-ray mineral-containing detection data, neutron mineral-free detection data and neutron mineral-containing detection data; and
step S12: determining a ratio of a differential cross-section of an element at each pixel point in the mineral for the neutron and a differential cross-section of the element at each pixel point in the mineral for the X-ray according to the X-ray mineral-free detection data, the X-ray mineral-containing detection data, the neutron mineral-free detection data and the neutron mineral-containing detection data, and performing the dual-mode imaging based on the ratio.

Further, the step S20 includes:

step S21: determining a type of an element at each pixel point in the mineral based on a ratio of a differential cross-section of the element at each pixel point in the mineral for the neutron and a differential cross-section of the element at each pixel point in the mineral for the X-ray;
step S22: determining a distribution of a target element based on the type of the element at each pixel point in the mineral, calculating a proportion of the target element in the mineral, and determining the proportion as a grade of the target element; and
step S23: determining whether the mineral is a concentrated ore or a lean ore according to the grade of the target element.

Further, the step S23 includes:
comparing the grade of the target element with a preset grade threshold, and determining whether the mineral is the concentrate ore or the lean ore based on a corresponding relationship between the preset grade threshold and the concentrate ore or the lean ore.

The technical solution provided by the embodiments of the present disclosure may include the following beneficial effects:
According to the mineral separation apparatus and the mineral separation method provided by the embodiments of the present disclosure, based on characteristics of different neutron cross-sections of different elements in the mineral and different photon cross-sections of different elements in the mineral, the light source component provides two types of rays, i.e., a neutron ray and an X-ray. A dual-mode imaging analysis may be performed based on the two types of rays, the type and the distribution of elements in the mineral may be determined, the proportion of the target element in the mineral may be calculated, and the proportion may be determined as the grade of the target element, so as to complete an identification and an analysis of the mineral. The solution may especially complete the separation of a lithium ore or boron ore. According to the mineral separation apparatus and the mineral separation method provided by the embodiments of the present disclosure, environmental pollution, water consumption, mineral separation cost and energy consumption may be reduced, and a stable and reliable quality of a mineral separation product may be ensured.

BRIEF DESCRIPTION OF THE DRAWINGS

Other features, objectives and advantages of the present disclosure will become more apparent by reading the detailed descriptions of non-restrictive embodiments with reference to the following accompanying drawings, in which:

FIG. 1 is a schematic diagram of a neutron (energy of 25.3 meV) cross-section and a photon (energy of 511 keV) cross-section of various common elements in a lithium mineral;
FIG. 2 is a schematic diagram of a (molecular) neutron (energy of 25.3 meV) cross-section and a (molecular) photon (energy of 511 keV) cross-section of various common materials in a lithium mineral;
FIG. 3 is a schematic diagram of a structure of a mineral separation apparatus provided by the embodiments of the present disclosure;
FIG. 4 is a schematic diagram of a flowchart of a mineral separation method provided by the embodiments of the present disclosure; and
FIG. 5 is a schematic diagram of an imaging of a lithium mineral using dual-mode detection imaging technology provided by the embodiments of the present disclosure.

DETAILED DESCRIPTION OF EMBODIMENTS

The present disclosure will be further described in detail below with reference to the accompanying drawings and embodiments. It may be understood that the specific embodiments described herein are only used to explain the present disclosure rather than to limit the present disclosure. It should be noted that, for the convenience of description, only parts related to the present disclosure are shown in the accompanying drawings.
It should be noted that, in a case of no conflicts, the embodiments and features in the embodiments of the present disclosure may be combined with each other. The present disclosure will be described in detail below with reference to the accompanying drawings and in conjunction with the embodiments.
The present disclosure provides a mineral separation technology based on a dual-mode detection imaging, in which a type and proportion of elements in the mineral may be determined based on a ratio of differential cross-sections of different elements and substances (e.g., an oxide) in the mineral for a neutron and differential cross-sections of different elements and substances (e.g., an oxide) in the mineral for an X-ray. That is, the type and proportion of the elements in the mineral may be determined by using the detection of the mineral by the neutron and the X-ray according to different attenuation capabilities of the mineral to the neutron and the X-ray.
A transmission of the neutron in the mineral follows an exponential law, as represented in Equation (1):

$$I_n = I_{n,0} \cdot e^{-\sum_{i=1}^{m} N_i \sigma_i D} \quad (1)$$

In the Equation (1), $I_{n,0}$ is the number of neutrons before being incident into the mineral or not penetrating the mineral, and $I_n$ is the number of neutrons after penetrating the mineral, both of which are measurable through experiments; i is a serial number of an element in the mineral, m is a total number of elements, and $\sigma_i$ is a neutron attenuation cross-section of the element i, all of which are known quantities; $N_i$ is a number density ($1/cm^3$) of an atom i in the mineral, which is related to the type of the mineral and is obviously an unknown quantity; and D is a size of the mineral. Since a crushing process may not be uniform, D is also an unknown quantity for a certain mineral to be detected. If the whole mineral is regarded as a homogeneous material, the Equation (1) may be rewritten as Equation (2):

$$Att_n = ln\left(\frac{I_{n,0}}{I_n}\right) = N\sigma D = \mu_{m,n} t_m \quad (2)$$

$Att_n$ is an attenuation of the neutron by the mineral, which is calculated by measurable $I_{n,0}$ and $I_n$, so $Att_n$ is also a measurable value. $\mu_{m,n}$ is an average mass attenuation coefficient ($cm^2/g$) of atoms in the mineral, $t_m$ is a mass thickness ($g/cm^2$) of the mineral, and $\mu_{m,n}$ and $t_m$ are obviously unknown quantities. $t_m$ is a quantity determined by the size of the mineral, and may not reflect a property of the substance. $\mu_{m,n}$ reflects a microscopic property of a nucleus (a physical meaning of which is a ratio of a cross-section of each nucleus to an atomic mass), and may thus be used to distinguish the substance, so as to achieve the mineral separation. However, since there is only one measured value $Att_n$, the two unknown quantities $t_m$. and $\mu_{m,n}$ may not be obtained at the same time, so that the property of the substance may not be obtained, and the mineral separation may not be performed.

A photon, like the neutron, is also a neutral ray, and its attenuation in the mineral follows a law of exponential decline. Therefore, the mineral separation may be performed by a dual-mode imaging of the photon (X is used here, i.e., an X-ray is used to penetrate the mineral) and the neutron. Therefore, the Equation (2) may be rewritten as Equation (3):

$$Att_X = ln\left(\frac{I_{X,0}}{I_X}\right) = \mu_{m,X} t_m \quad (3)$$

$Att_X$ is an attenuation of the photon by the mineral. $I_{X,0}$ is the number of photons not penetrating the mineral, and $I_X$ is the number of photons after penetrating the mineral. $\mu_{m,X}$ is an average mass attenuation coefficient of the photon by atoms in the mineral. $t_m$. is not changed since the mineral is the same. By combining Equations (2) and (3), Equation (4) may be obtained:

$$F = \frac{Att_n}{Att_X} = \frac{\mu_{m,n} t_m}{\mu_{m,X} t_m} = \frac{\mu_{m,n}}{\mu_{m,X}} = \frac{\frac{\sigma_n}{m_N}}{\frac{\sigma_X}{m_A}} \approx \frac{\sigma_n}{\sigma_X} \quad (4)$$

In the Equation (4), a factor F is determined by a ratio of a differential cross-section $\sigma_n$ of the element for the neutron and a differential cross-section $\sigma_X$ of the element for the photon (an approximation is used here, i.e. a mass $m_N$ of a nucleus is approximately equal to a mass $m_A$ of an atom, which is obviously valid).

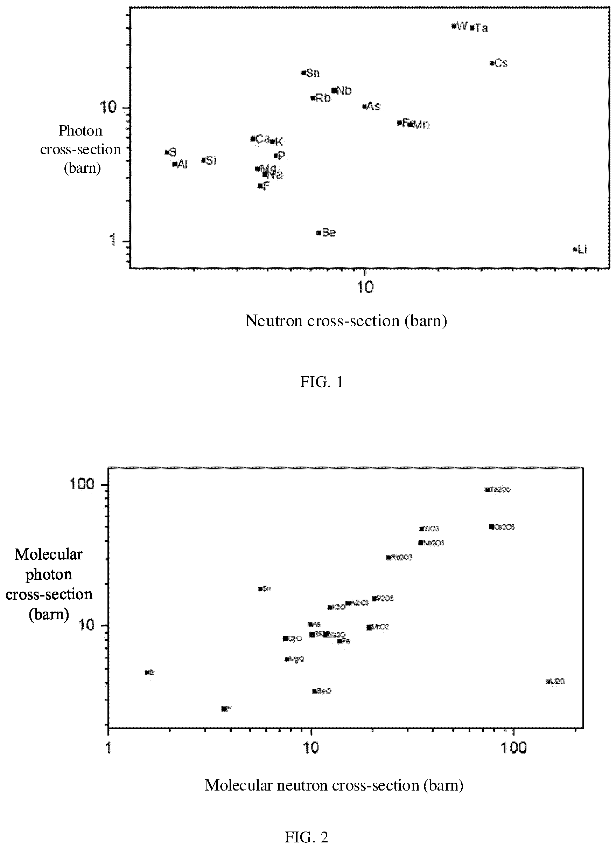

FIG. 1 is a schematic diagram of a neutron (energy of 25.3 meV) cross-section and a photon (energy of 511 keV) cross-section of various common elements in a lithium mineral. FIG. 2 is a schematic diagram of a (molecular) neutron (energy of 25.3 meV) cross-section and a (molecular) photon (energy of 511 keV) cross-section of various common materials in a lithium mineral. Referring to FIG. 1 and FIG. 2, various elements and oxides in the lithium mineral may not only have different neutron cross-sections, but also have different photon cross-sections, in which a lithium (Li) element or lithium oxide ($Li_2O$) has a significantly large neutron reaction cross-section and a relatively small photon reaction cross-section. As described above, $Att_n$ is the attenuation of the neutron by the mineral, which may be obtained by measurement and calculation and is a measurable value, and $Att_x$ is the attenuation of the photon by the mineral, which may be obtained by measurement and calculation and is also a measurable value. Therefore, a magnitude of the factor F of the mineral may be obtained by measurement and calculation. According to the above-mentioned Equation (4), the factor F is also represented as the ratio of the differential cross-section $\sigma_n$ of the mineral for the neutron and the differential cross-section $\sigma_X$ of the mineral for the photon, which are actually reciprocals of slopes in FIG. 1 and FIG. 2. It may be seen from FIG. 1 and FIG. 2 that Li and $Li_2O$, as elements/materials with large neutron cross-sections and small photon cross-sections, have the minimum slope, that is, the maximum factor F. When a grade of lithium in the mineral changes, a contribution of the lithium to the factor F may also change. A content of lithium in the lithium ore may be analyzed by measuring the factor F of the lithium ore, so as to achieve the grade analysis.

Similarly, like lithium, a thermal neutron cross-section of boron is much greater than that of most other elements in the mineral. Therefore, boron also has a high neutron analysis sensitivity, so that the boron ore separation may be performed by a dual-mode imaging of the X-ray and the neutron. That is, the above-mentioned principle of using the factor F for the mineral separation may also applied to the boron ore separation.

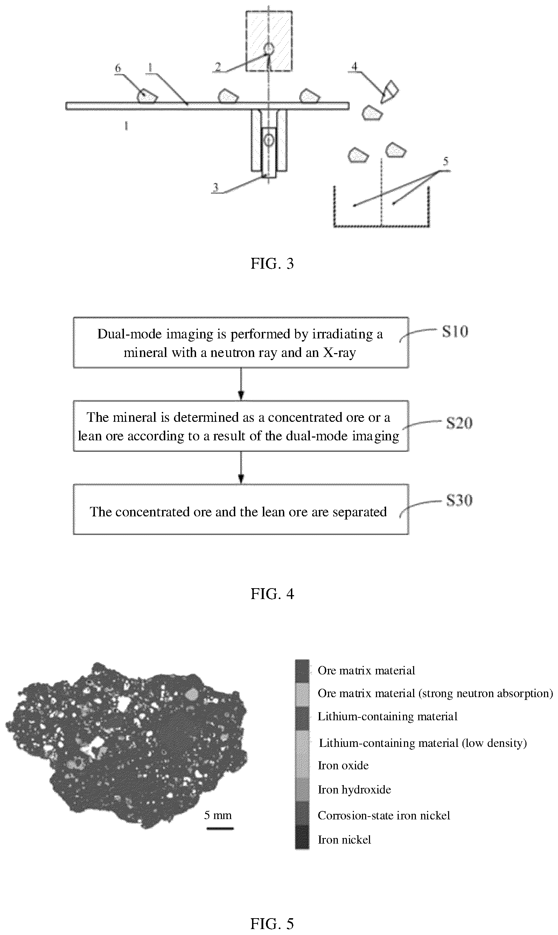

As shown in FIG. 3, the embodiments of the present disclosure provide a mineral separation apparatus, including:

a conveying mechanism 1, a first light source component 2 located above the conveying mechanism 1, a first detector component 3 located below the conveying mechanism 1, and a separation mechanism 4;
where the conveying mechanism 1 is used to convey a mineral 6;
where the first light source component 2 is used to emit a neutron ray irradiated on the mineral 6 and an X-ray irradiated on the mineral 6;
where the first detector component 3 is used to detect and acquire detection data of the X-ray attenuated by the mineral, detection data of the X-ray not attenuated by the mineral, detection data of the neutron ray attenuated by the mineral, and detection data of the neutron ray not attenuated by the mineral; and
where the separation mechanism 4 is used to separate the mineral 6.

**EP 4 582 796 A1**

According to the mineral separation apparatus provided by the embodiments, the first light source component 2 is a light source that provides a neutron ray and an X-ray at the same time, and the first detector component may detect attenuated neutron rays and X-rays transmitted through the mineral. The dual-mode imaging may be performed on the mineral by using the attenuated neutron rays and X-rays to determine the factor F of each element in the mineral, so as to determine the type of various elements in the mineral and determine the proportion of a target element. The mineral separation apparatus may significantly reduce the environmental pollution, the water consumption, the mineral separation cost and the energy consumption, and achieve a stable and reliable quality of a mineral separation product.

Further, the first light source component 2 may be a light source that generates both a neutron ray and an X-ray (a photon) using an accelerator. The process is as follows. High-energy electrons emitted by an electron accelerator generate bremsstrahlung on an anode target, such as a tungsten target, a lead target, etc. A part of bremsstrahlung photons produces photoneutrons through a photo-nuclear reaction, the other part of bremsstrahlung photons become X-rays for imaging, and the two types of rays are generated at the same time. However, due to different flight speeds of the two types of rays, after a certain flight distance, the two types of rays irradiate the mineral and reach the detector component at different times. Therefore, the two types of rays may be distinguished by setting different detection times, so that two modes of imaging detections may be achieved. Preferably, the first light source component 2 generates high-energy electrons in a form of pulses, so as to generate the neutron ray and the X-ray in the form of pulses. In addition, the first light source component 2 may include two light sources that generate the neutron ray and the X-ray respectively, for example, a first light source and a second light source independent from each other. The first light source is used to emit the neutron ray irradiated on the mineral, and the second light source is used to emit the X-ray irradiated on the mineral. That is, the two independent light sources provide the neutron ray and the X-ray, respectively. The first light source and the second light source are sequentially provided in a conveying direction of the conveying mechanism, and a setting distance between the first light source and the second light source may be determined based on a conveying speed of the conveying mechanism 1.

Further, the first light source component 2 includes a photoneutron source. A photoneutron source slowed down to thermal neutrons may be used, and a photoneutron source with insufficient slowing down is not excluded. Thermal neutron beams may be better absorbed by the mineral, thereby effectively improving an accuracy of the mineral separation.

Further, the first detector component 3 includes a neutron detector and an X-ray detector. The first detector component may include one detector that achieves the neutron detection and the X-ray detection, or include two detectors independent from each other that detect the neutron and the X-ray respectively.

In the embodiments of the present disclosure, the first light source component 2 may be provided with one beam outlet for emitting the X-ray and the neutron ray, or may be provided with two beam outlets for emitting the X-ray and the neutron ray respectively. The X-ray may be in a form of fan beams, flying spot beams or cone beams. The neutron ray may also be in a form of fan beams, flying spot beams or cone beams.

If the beam outlet of the X-ray is the same as the beam outlet of the neutron ray, the first detector component may be one detector that achieves the neutron detection and the X-ray detection. Whether the X-ray or the neutron ray is detected may be distinguished by using a time difference it takes for the X-ray and the neutron to reach the beam outlet.

If the beam outlet of the X-ray and the beam outlet of the neutron ray are provided separately, an X-ray beam outlet and a neutron ray beam outlet may be sequentially provided in the conveying direction of the conveying mechanism. The first detector component may include an X-ray detector and a neutron ray detector, which are used to detect the X-ray and the neutron respectively. The X-ray detector corresponds to the X-ray beam outlet, and the neutron ray detector corresponds to the neutron ray beam outlet.

Further, the separation mechanism 4 of the mineral separation apparatus may be specifically a blowing apparatus. Furthermore, the mineral separation apparatus further includes a mineral separation bin 5. The blowing apparatus is provided on a side of the conveying mechanism 1, an air-blowing port of the blowing apparatus faces an end of the conveying mechanism 1, and the mineral separation bin 5 is provided below the blowing apparatus. The mineral separation bin 5 includes a concentrate ore bin and a lean ore bin. The mineral is blown into the concentrate ore bin or the lean ore bin by the blowing apparatus, so as to achieve the segregation and separation of the concentrate ore and the lean ore. As shown in FIG. 3, the mineral separation bin 5 includes two bins, i.e., a concentrate ore bin and a lean ore bin. However, the number of mineral separation bins may be determined according to actual situations.

Further, the blowing apparatus includes a high-pressure nozzle, and the high-pressure nozzle includes blowing holes arranged in an array.

A blowing time of the blowing apparatus of the mineral separation apparatus may be determined according to the conveying speed of the conveying mechanism 1, a setting position of the blowing apparatus, etc. The mineral separation work may be achieved by cooperating with a controller. For one blowing, when the mineral leaves the conveying mechanism 1 and reaches the blowing position through a horizontal projectile motion, the controller may open all or part of blowing holes in the high-pressure nozzle according to a grade and a position of the mineral, so as to blow the mineral into a corresponding bin.

6

The embodiments of the present disclosure further provide a mineral separation system, including the above-mentioned mineral separation apparatus.

Further, the mineral separation system of the present disclosure further includes a crushing apparatus (not shown). The crushing apparatus is provided upstream of the conveying mechanism 1 and is used to crush the mineral before the mineral enters the conveying mechanism 1. The crushing apparatus may preferably include a vibration crusher and a screen. The screen preferably has a double-layer structure with a specified spacing, and has a mesh with an adjustable size. The crushing apparatus is used to supply the mineral with a size falling within a predetermined range to the conveying mechanism 1.

Further, the mineral separation system of the present disclosure may further include a controller (not shown). The controller may be communicated connected to the conveying mechanism 1, the first light source component 2, the first detector component 3, the separation mechanism 4, and the crushing apparatus, etc., so as to control the work of each part. For example, the controller is used to process a ray signal received by the first detector component 3, obtain the factor F of each position of the mineral on the conveying mechanism 1 through calculation, determine a grade of the mineral based on the factor F, and control the separation mechanism 4 to separate the mineral with the corresponding grade. For example, the controller determines a size of the mineral based on a dual-mode imaging image of the mineral, associates the size of the mineral with the grade, determines a size range of the mineral determined as a concentrate ore and then determine a size distribution law, and adjusts a mesh size of the screen of the crushing apparatus in real time according to the size range or the size distribution law.

It should be noted that the mineral separation apparatus shown in FIG. 3 includes a first light source component 2 and a first detector component 3 respectively provided above and below the conveying mechanism 1. However, the first light source component 2 and the first detector component 3 may also be provided on both sides of the conveying mechanism 1, respectively. Alternatively, the mineral separation apparatus includes a first light source component 2 and a first detector component 3 respectively provided above and below the conveying mechanism 1, and a second light source component and a second detector component respectively provided on both sides of the conveying mechanism 1, so as to perform a top-illuminated and side-illuminated dual-view detection on the mineral on the conveying mechanism 1. Information of the mineral may be determined more accurately by a dual-view detection method, so as to determine the factor F of elements at each pixel point, thereby determining the grade of the mineral more accurately.

On the other hand, the embodiments of the present disclosure further provide a mineral separation method, which is applied to a mineral separation system. The mineral separation system includes the above-mentioned mineral separation apparatus and a controller.

As shown in FIG. 4, the mineral separation method provided by the embodiments of the present disclosure includes:

>   step S10: performing a dual-mode imaging by irradiating the mineral with the neutron ray and the X-ray;
>   step S20: determining, according to a result of the dual-mode imaging, the mineral as one of different grades of mineral; and
>   step S30: separating the one grade of mineral from other grades of mineral.

The controller controls the light source component, the conveying mechanism, the detector component and the separation mechanism to work. The light source component emits an X-ray and a neutron ray. The conveying mechanism conveys the mineral. The detector component detects and acquires detection data of the X-ray and the neutron ray.

In some exemplary embodiments, the step S10 may include:

>   step S11: detecting, by a detector component, the detection data of the X-ray attenuated by the mineral, the detection data of the X-ray not attenuated by the mineral, the detection data of the neutron ray attenuated by the mineral, and the detection data of the neutron ray not attenuated by the mineral, so as to obtain X-ray mineral-free detection data, X-ray mineral-containing detection data, neutron mineral-free detection data and neutron mineral-containing detection data; and
>   step S12: determining a ratio of a differential cross-section of an element at each pixel point in the mineral for the neutron and a differential cross-section of the element at each pixel point in the mineral for the X-ray according to the X-ray mineral-free detection data, the X-ray mineral-containing detection data, the neutron mineral-free detection data and the neutron mineral-containing detection data, and performing the dual-mode imaging based on the ratio.

In the step S11, the detection data of the X-ray and the neutron ray which are not attenuated by the mineral may also be detection data collected and stored in advance on the conveying mechanism in a mineral-free state. In this way, only the detection data of the X-ray and the neutron ray which are attenuated by the mineral may be processed, thereby reducing a burden of data processing.

In some exemplary embodiments, the step S20 may include:

step S21: determining a type of an element at each pixel point in the mineral based on a ratio of a differential cross-section of the element at each pixel point in the mineral for the neutron and a differential cross-section of the element at each pixel point in the mineral for the X-ray;

step S22: determining a distribution of a target element based on the type of the element at each pixel point in the mineral, calculating a proportion of the target element in the mineral, and determining the proportion as a grade of the target element; and

step S23: determining whether the mineral is a concentrated ore or a lean ore according to the grade of the target element.

In some exemplary embodiments, the step S21 may include: comparing and matching the ratio (i.e. the factor F) of the differential cross-section of the element at each pixel point for the neutron and the differential cross-section of the element at each pixel point for the X-ray with reciprocals of slopes of elements and oxides in FIG. 1 and FIG. 2, so as to determine the type of the element.

In some exemplary embodiments, the step S22 may include: labeling different elements with different colors (e.g., different grayscales) in a projection region of the mineral based on the element type at each pixel point, so as to determine the distribution of the target element; and determining the proportion of the target element in the mineral based on a distribution region (e.g., area) of the target element, so as to obtain the grade of the target element.

In some exemplary embodiments, the step S23 may include: comparing the grade of the target element in the mineral with a preset grade threshold, and determining whether the mineral is the concentrate ore or the lean ore based on a corresponding relationship between the preset grade threshold and the concentrate ore or the lean ore.

For example, the corresponding relationship between the preset grade factor threshold and the concentrate ore or lean ore may be set as follows: a non-concentrate ore has a grade less than 1.5%, a concentrate ore has a grade greater than or equal to 1.5% and less than 1.8%, and a high-quality concentrate ore has a grade greater than or equal to 1.8%.

Before the mineral separation, an optimal crushing size may be analyzed according to ore samples from different mines. Within an optimal crushing particle size range, the dual-mode imaging is performed on the mineral using the mineral separation method, and the grade is calculated, so as to select as many high-grade minerals as possible. As described above, the crushing size may also be analyzed and adjusted during the mineral separation.

In some preferred embodiments, the mineral includes a lithium mineral, and the target element is a lithium element. Alternatively, the mineral includes a boron mineral, and the target element is a boron element.

According to the mineral separation method of the present disclosure, the environmental pollution, the water consumption, the mineral separation cost and the energy consumption may be reduced, and the stable and reliable quality of the mineral separation product may be achieved. The mineral separation method of the present disclosure is particularly applied to the separation of the lithium ore and the boron ore.

According to the mineral separation method of the present disclosure, the factor F of each position in the mineral may be determined by the dual-mode imaging, so as to determine the type of the element at each position of the mineral. FIG. 5 shows a result (grayscale display) of substance identification imaging on a lithium mineral by the dual-mode imaging. However, distribution characteristics of the lithium mineral may be clearly seen in a corresponding RGB (red, green and blue) mode. This is because Li or $Li_2O$, B or $B_2O_3$ have higher neutron analysis sensitivity than other elements, and Li or $Li_2O$, B or $B_2O_3$ may be easily distinguished from the other elements based on a ratio of the differential cross-section for the neutron and the differential cross-section for the X-ray by the dual-mode imaging. In contrast, for example, it is difficult to distinguish a sodium ore from a potassium ore according to the ratio of the differential cross-section for the neutron and the differential cross-section for the X-ray.

In the descriptions of the present disclosure, it should be understood that, terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" and other directional or positional relationships indicated are based on the directional or positional relationships shown in the accompanying drawings, which are only for the convenience of describing the present disclosure and simplifying the descriptions, and are not intended to indicate or imply that the apparatus or element referred to must have a specific orientation, be constructed and operated in a specific orientation. Therefore, the terms may not be construed as limiting the present disclosure.

In the present disclosure, various information is described using "first", "second", etc. However, the information should not be limited to these terms. These terms are only used to distinguish the same type of information from each other. For example, without departing from the scope of the present disclosure, first information may also be called second information, and similarly, the second information may also be called the first information.

In the descriptions of the present disclosure, it should be noted that, unless otherwise specified and limited, terms "installation", "coupling" and "connection" should be broadly understood, for example, they may include a fixed connection, a detachable connection or an integrated connection; they may include a mechanical connection or an electrical connection; they may include a direct connection, an indirect connection through an intermediate medium, or an internal communication between two elements, a wireless connection or a wired connection. For those of ordinary skilled in the art, the specific meanings of the above-mentioned terms in the present disclosure may be understood in specific situations.

The above-mentioned descriptions are only preferred embodiments of the present disclosure and an explanation of the applied technical principles. It should be understood by those of ordinary skilled in the art that the scope of the present disclosure is not limited to the technical solution formed by specific combinations of the above technical features, and should also cover other technical solutions formed by any combination of the above technical features or their equivalent features without departing from the inventive concept, such as the technical solution formed by replacing the above features with (but not limited to) the technical features with similar functions disclosed in the present disclosure.

**Claims**

1. A mineral separation apparatus, comprising:

   a conveying mechanism, a first light source component located above the conveying mechanism, a first detector component located below the conveying mechanism, and a separation mechanism,
   wherein the first light source component is configured to emit a neutron ray irradiated on a mineral and an X-ray irradiated on the mineral;
   wherein the first detector component is configured to detect and acquire detection data of the X-ray attenuated by the mineral, detection data of the X-ray not attenuated by the mineral, detection data of the neutron ray attenuated by the mineral, and detection data of the neutron ray not attenuated by the mineral; and
   wherein the separation mechanism is configured to separate the mineral.

2. The mineral separation apparatus according to claim 1, wherein the first light source component comprises a first light source and a second light source independent from each other, the first light source is configured to emit the neutron ray irradiated on the mineral, the second light source is configured to emit the X-ray irradiated on the mineral, and the first light source and the second light source are sequentially provided in a conveying direction of the conveying mechanism.

3. The mineral separation apparatus according to claim 1, wherein the first detector component comprises a neutron detector and an X-ray detector independent from each other.

4. The mineral separation apparatus according to claim 1, further comprising:

   a second light source component provided on a side in a conveying direction of the conveying mechanism; and
   a second detector component provided on another side in the conveying direction of the conveying mechanism.

5. The mineral separation apparatus according to any one of claims 1 to 4, wherein the separation mechanism is a blowing apparatus, and the blowing apparatus is configured to separate the mineral leaving the conveying mechanism.

6. The mineral separation apparatus according to claim 5, wherein the blowing apparatus comprises a high-pressure nozzle, and the high-pressure nozzle comprises blowing holes arranged in an array.

7. A mineral separation method, applied to a mineral separation system comprising the mineral separation apparatus according to any one of claims 1 to 6 and a controller, comprising:

   step S10: performing a dual-mode imaging by irradiating the mineral with the neutron ray and the X-ray;
   step S20: determining, according to a result of the dual-mode imaging, the mineral as one of different grades of mineral; and
   step S30: separating the one grade of mineral from other grades of mineral.

8. The mineral separation method according to claim 7, wherein the step S10 comprises:

   step S11: detecting, by a detector component, the detection data of the X-ray attenuated by the mineral, the detection data of the X-ray not attenuated by the mineral, the detection data of the neutron ray attenuated by the mineral, and the detection data of the neutron ray not attenuated by the mineral, so as to obtain X-ray mineral-free detection data, X-ray mineral-containing detection data, neutron mineral-free detection data and neutron mineral-containing detection data; and

step S12: determining a ratio of a differential cross-section of an element at each pixel point in the mineral for the neutron and a differential cross-section of the element at each pixel point in the mineral for the X-ray according to the X-ray mineral-free detection data, the X-ray mineral-containing detection data, the neutron mineral-free detection data and the neutron mineral-containing detection data, and performing the dual-mode imaging based on the ratio.

9. The mineral separation method according to claim 7, wherein the step S20 comprises:

step S21: determining a type of an element at each pixel point in the mineral based on a ratio of a differential cross-section of the element at each pixel point in the mineral for the neutron and a differential cross-section of the element at each pixel point in the mineral for the X-ray;

step S22: determining a distribution of a target element based on the type of the element at each pixel point in the mineral, calculating a proportion of the target element in the mineral, and determining the proportion as a grade of the target element; and

step S23: determining whether the mineral is a concentrated ore or a lean ore according to the grade of the target element.

10. The mineral separation method according to claim 9, wherein the step S23 comprises:

comparing the grade of the target element with a preset grade threshold, and determining whether the mineral is the concentrate ore or the lean ore based on a corresponding relationship between the preset grade threshold and the concentrate ore or the lean ore.

FIG. 1

FIG. 2

FIG. 3

Dual-mode imaging is performed by irradiating a mineral with a neutron ray and an X-ray — S10

The mineral is determined as a concentrated ore or a lean ore according to a result of the dual-mode imaging — S20

The concentrated ore and the lean ore are separated — S30

FIG. 4

5 mm

Ore matrix material

Ore matrix material (strong neutron absorption)

Lithium-containing material

Lithium-containing material (low density)

Iron oxide

Iron hydroxide

Corrosion-state iron nickel

Iron nickel

FIG. 5

## INTERNATIONAL SEARCH REPORT

| International application No. |
|---|
| **PCT/CN2023/111104** |

### A. CLASSIFICATION OF SUBJECT MATTER

G01N23/04(2018.01)i; G01N23/05(2006.01)i; G01N23/083(2018.01)i; G01N23/09(2018.01)i; B07C5/34(2006.01)i

According to International Patent Classification (IPC) or to both national classification and IPC

### B. FIELDS SEARCHED

Minimum documentation searched (classification system followed by classification symbols)

IPC:G01N B07C

Documentation searched other than minimum documentation to the extent that such documents are included in the fields searched

Electronic data base consulted during the international search (name of data base and, where practicable, search terms used)

CNTXT; ENTXT; VEN: 矿物, 矿石, 分选, 分离, 射线, 光源, 探测, 中子, mineral, sort, separate, ray, light source, detect, neutron

### C. DOCUMENTS CONSIDERED TO BE RELEVANT

| Category* | Citation of document, with indication, where appropriate, of the relevant passages | Relevant to claim No. |
|---|---|---|
| PX | CN 115326845 A (NUCTECH CO., LTD. et al.) 11 November 2022 (2022-11-11)<br>claims 1-10 | 1-10 |
| Y | CN 214289466 U (XNDT TECHNOLOGY CO., LTD. et al.) 28 September 2021 (2021-09-28)<br>description, pages 3-13, and figures 1-12 | 1-10 |
| Y | CN 110779939 A (NUCTECH CO., LTD. et al.) 11 February 2020 (2020-02-11)<br>description, pages 4-10, and figures 1-10 | 1-10 |
| Y | CN 112495834 A (HUZHOU HUOLISITE INTELLIGENT TECHNOLOGY CO., LTD.) 16 March 2021 (2021-03-16)<br>description, pages 3-14, and figures 1-15 | 1-10 |
| Y | CN 102608651 A (NUCTECH CO., LTD. et al.) 25 July 2012 (2012-07-25)<br>description, pages 2-4, and figures 1-4 | 1-10 |
| A | CN 106040617 A (INNER MONGOLIA UNIVERSITY OF SCIENCE & TECHNOLOGY) 26 October 2016 (2016-10-26)<br>entire document | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2023** | **20 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/111104** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 112986297 A (COMMONWEALTH SCIENTIFIC AND INDUSTRIAL RESEARCH ORGANISATION) 18 June 2021 (2021-06-18)<br>    entire document | 1-10 |
| A | CN 205020424 U (CHONGQING UNIVERSITY OF SCIENCE AND TECHNOLOGY) 10 February 2016 (2016-02-10)<br>    entire document | 1-10 |
| A | CN 113238270 A (TSINGHUA UNIVERSITY) 10 August 2021 (2021-08-10)<br>    entire document | 1-10 |
| A | AU 2011203239 A1 (COMMONWEALTH SCIENTIFIC AND INDUSTRIAL RESEARCH ORGANISATION) 01 March 2012 (2012-03-01)<br>    entire document | 1-10 |

Form PCT/ISA/210 (second sheet) (July 2022)

**INTERNATIONAL SEARCH REPORT**
Information on patent family members

International application No.

**PCT/CN2023/111104**

| Patent document cited in search report | | | Publication date (day/month/year) | Patent family member(s) | | | Publication date (day/month/year) |
|---|---|---|---|---|---|---|---|
| CN | 115326845 | A | 11 November 2022 | None | | | |
| CN | 214289466 | U | 28 September 2021 | None | | | |
| CN | 110779939 | A | 11 February 2020 | US | 2021333224 | A1 | 28 October 2021 |
| | | | | US | 11474051 | B2 | 18 October 2022 |
| | | | | WO | 2020010951 | A1 | 16 January 2020 |
| | | | | AU | 2019284097 | A1 | 06 February 2020 |
| | | | | DE | 112019000082 | T5 | 23 July 2020 |
| CN | 112495834 | A | 16 March 2021 | None | | | |
| CN | 102608651 | A | 25 July 2012 | None | | | |
| CN | 106040617 | A | 26 October 2016 | None | | | |
| CN | 112986297 | A | 18 June 2021 | CA | 3103188 | A1 | 17 June 2021 |
| | | | | US | 2021208087 | A1 | 08 July 2021 |
| | | | | AU | 2020289837 | A1 | 01 July 2021 |
| CN | 205020424 | U | 10 February 2016 | None | | | |
| CN | 113238270 | A | 10 August 2021 | None | | | |
| AU | 2011203239 | A1 | 01 March 2012 | AU | 2011203239 | B2 | 19 September 2013 |

Form PCT/ISA/210 (patent family annex) (July 2022)

**REFERENCES CITED IN THE DESCRIPTION**

**Patent documents cited in the description**

- CN 202211064776